# FASCICULE DE BREVET EUROPEEN

(11) **EP 2 488 409 B1**
(45) Date de publication et mention de la délivrance du brevet: **06.01.2016**
(21) Numéro de dépôt: 10785104.0
(22) Date de dépôt: 12.10.2010
(51) Int. Cl.: B64B 1/02, B64B 1/66, B64B 1/68

(54) **BALLON DIRIGEABLE.**
LUFTSCHIFF
DIRIGIBLE AIRSHIP

(30) Priorité: 14.10.2009 FR 0957179
(43) Date de publication de la demande: 22.08.2012
(73) Titulaire: A-NTE (Aero-Nautic Technology & Engineering), 92120 Montrouge (FR)
(72) Inventeur: REGAS, Baptiste, 44000 Nantes (FR); JOZAN, Olivier, 44000 Nantes (FR)
(74) Mandataire: Cabinet Plasseraud
(86) Numéro de dépôt international: PCT/FR2010/052161
(87) Numéro de publication internationale: WO 2011/045529

(56) Documents cités:
- DE-A1- 19 911 617
- FR-A1- 2 747 641
- US-A- 1 350 211
- US-A- 1 949 304

## Description

La présente invention est relative aux ballons dirigeables.

Plus particulièrement, l'invention concerne un ballon dirigeable, destiné à voler dans l'air et à se poser sur une surface solide ou liquide, comprenant :
- une enveloppe souple sans structure interne rigide et enfermant un gaz plus léger que l'air, ladite enveloppe étant allongé sensiblement selon un axe longitudinal entre un nez situé vers l'avant dudit ballon dirigeable et une queue située vers l'arrière dudit ballon dirigeable, et comportant une partie supérieure et une partie inférieure, et
- une nacelle reliée à la partie inférieure de l'enveloppe entre le nez et la queue.

On connaît de nombreux exemples de ballon dirigeables de ce type, dit « souple », c'est-à-dire à enveloppe souple. Le document FR-A-2 628 061 décrit un exemple d'un tel ballon dirigeable.

Pour ce type de ballons dirigeables, le lien entre la nacelle et l'enveloppe souple est insuffisamment résistant pour soulever la nacelle. En effet, le gaz contenu dans l'enveloppe souple exerce une force de portée répartie sur la surface de la partie supérieure de l'enveloppe. La nacelle est donc suspendue à cette partie supérieure de l'enveloppe par des câbles traversant entièrement l'enveloppe.

En outre, les ballons dirigeables de ce type ont besoin d'une zone d'atterrissage comprenant un mât d'amarrage, destiné à retenir le ballon dirigeable à proximité de la surface du sol. Ainsi, lors d'un vent latéral le ballon dirigeable tourne naturellement autour du mât comme une girouette, jusqu'à ce que son nez soit face au vent. Ces mâts d'amarrage sont coûteux et doivent être solidement ancrés dans le sol.

Lors de l'atterrissage d'un tel ballon dirigeable, plusieurs personnes sont nécessaires pour le stabiliser à proximité du mât, pour l'arrimer au mât en faisant passer au moins une corde entre le ballon, le sommet du mât et le sol pour amener le nez du ballon dirigeable à proximité du sommet du mât, mais également autour du ballon pour apporter des lests et aider à le stabiliser près de la surface du sol.

On connaît également des ballons dirigeables « rigides » ou « semi-rigides », tels que ceux décrits dans les brevets US 1 949 304, US 1 350 221, US 2 131 155, ou US 2 061 075.

Mais ces autres types de ballons dirigeables sont complexes à réaliser, lourds et donc coûteux et peu efficaces.

La présente invention a pour but de perfectionner les ballons dirigeables du type à enveloppe souple, notamment pour améliorer le lien entre la nacelle et l'enveloppe souple, et pour éviter d'avoir besoin de recourir à ces équipements et au personnel, sur la zone d'atterrissage.

A cet effet, le ballon dirigeable est **caractérisé en ce que** le ballon dirigeable comprend en outre :
- au moins trois pieds éloignés horizontalement l'un de l'autre et adaptés pour poser le ballon dirigeable sur la surface, et
- une structure d'atterrissage située à l'extérieur de l'enveloppe reliant entre eux les pieds, la nacelle et l'enveloppe,
ladite structure d'atterrissage comprenant une structure de renfort pour supporter et maintenir l'enveloppe en entourant au moins partiellement ladite enveloppe et en délimitant un premier et un second côté, l'enveloppe comprenant une première surface du premier côté et une seconde surface du second côté, les première et seconde surfaces de l'enveloppe étant souples et en contact avec un écoulement de l'air dans lequel le ballon dirigeable est destiné à voler.

Grâce à ces dispositions, un tel ballon dirigeable peut être posé de manière stable sur la surface sans avoir besoin d'équipement, tel qu'un mât d'accrochage, ni de tout personnel dans la zone d'atterrissage. Un tel ballon est donc autonome. Il peut se poser n'importe où, sur terre, sur mer, ou sur un lac.

Ce ballon dirigeable a une structure d'atterrissage légère et facile à réaliser.

Il est donc peu coûteux à réaliser et à utiliser.

Dans divers modes de réalisation du ballon dirigeable selon l'invention, on peut éventuellement avoir recours en outre à l'une et/ou à l'autre des dispositions suivante :
- la structure d'atterrissage comprend en outre :
   - une structure de renfort entourant partiellement l'enveloppe et reliée par l'extérieur à l'enveloppe par des moyens d'accrochage, afin de supporter et maintenir l'enveloppe du ballon dirigeable dans la structure d'atterrissage, et
   - des traverses reliant la nacelle à ladite structure de renfort ;
- la structure de renfort a une forme choisie parmi une forme annulaire, une forme semi-annulaire, et une forme courbée ;
- la structure de renfort comprend au moins une première portion au dessus d'un plan médian horizontal passant par l'axe longitudinal et une seconde portion au dessous dudit plan ;
- la première portion est à proximité du nez de l'enveloppe ;
- la structure de renfort est constituée d'une poutre courbée réalisée d'une seule pièce ;
- les moyens d'accrochage exercent des efforts sur l'enveloppe pour contrôler un profil de l'enveloppe au moins à proximité de la structure de renfort, afin de conserver une bonne pénétration de l'enveloppe souple dans l'air lorsque le ballon dirigeable avance en vol ;
- la structure de renfort est construite avec au moins un des matériaux d'une liste comprenant l'aluminium, le carbone, le magnésium, le titane, l'acier, les fibres de verre, un matériau synthétique, un polymère, le bois ;
- la structure d'atterrissage comprend en outre des bras s'étendant chacun vers le bas depuis une première extrémité fixée à la structure de renfort jusqu'à une deuxième extrémité, chaque deuxième extrémité comprenant un desdits pieds adapté pour poser le ballon dirigeable sur la surface ;
- le ballon dirigeable comprend en outre un câble d'amarrage adapté pour s'étendre vers l'avant entre une portion de nez de la structure de renfort et un point d'amarrage sensiblement fixe de la surface adapté pour retenir le ballon dirigeable à proximité du point d'amarrage lorsque ledit ballon dirigeable est posé sur la surface, et un au moins des bras est incliné depuis la structure de renfort vers l'avant pour résister à un effort de traction du câble d'amarrage ;
- le ballon dirigeable comprend en outre un câble d'amarrage adapté pour s'étendre entre au moins un point de la structure d'atterrissage et un point d'amarrage sensiblement fixe de la surface adapté pour retenir le ballon dirigeable à proximité du point d'amarrage lorsque ledit ballon dirigeable est posé sur la surface ;
- le ballon dirigeable comprend en outre un bras longitudinal s'étendant sensiblement horizontalement depuis la nacelle vers le nez et un câble d'amarrage adapté pour s'étendre entre au moins une extrémité distale du bras longitudinal et un point d'amarrage sensiblement fixe de la surface adapté pour retenir le ballon dirigeable à proximité du point d'amarrage lorsque ledit ballon dirigeable est posé sur la surface ;
- chaque pied est équipé d'au moins une roue adaptée pour que le ballon dirigeable puisse se poser et se déplacer sensiblement horizontalement sur une surface solide, et les pieds sont situés verticalement vers le bas sous la nacelle ;
- la nacelle comprend un bac et un moyen de préhension adapté pour prendre sur la surface un matériau et l'amener dans le bac, afin de lester ledit ballon dirigeable ;
- chaque pied est équipé d'un flotteur adapté pour que le ballon dirigeable puisse se poser sur une surface liquide ;
- la nacelle comprend un réservoir et une pompe adaptée pour remplir ledit réservoir lorsque le ballon dirigeable est posé sur ou en en vol quasi-stationnaire au dessus d'une surface liquide, afin de lester ledit ballon dirigeable ;
- le ballon dirigeable comprend en outre une pluralité de propulseurs orientables, et dans lequel au moins un des propulseurs est orientable selon deux axes de contrôle montés en série, l'un après l'autre, pour orienter selon une direction quelconque ledit propulseur ;
- chaque pied est équipé d'un réservoir adapté pour être au moins partiellement rempli lorsque le ballon dirigeable est posé sur ou en en vol quasi-stationnaire au dessus d'une surface, afin de lester ledit ballon dirigeable ;
- au moins un pied est également équipé d'un flotteur ;
- le pied arrière et la nacelle sont équipés de flotteurs ;
- les pieds avant situés latéralement par rapport à un axe longitudinal de l'enveloppe sont reliés à la structure d'atterrissage, chacun par un câble pour retenir dans une direction sensiblement verticale les réservoirs des pieds avant ;
- la structure d'atterrissage comprend en outre des bras avant reliant chacun desdits pieds avant à la nacelle ;
- les bras avant sont repliables dans une direction sensiblement parallèle à l'axe longitudinal lorsque le ballon dirigeable vole, et déployables latéralement lorsque le ballon dirigeable est soit prêt à être posé sur la surface, soit maintenu de manière quasi-stationnaire au dessus de la surface.

D'autres caractéristiques et avantages de l'invention apparaîtront au cours de la description suivante de trois de ses modes de réalisation, donnés à titre d'exemples non limitatifs, en regard des dessins joints.

Sur les dessins :
- la figure 1 est une vue en perspective d'un ballon dirigeable selon un premier mode de réalisation de l'invention,
- la figure 2 est une vue de côté du ballon dirigeable de la figure 1,
- la figure 3 est une vue de face du ballon dirigeable de la figure 1,
- la figure 4 est une vue de côté similaire à la figure 2 présentant l'amarrage à la surface,
- la figure 5 est une vue de détail du propulseur arrière du ballon dirigeable de la figure 1,
- la figure 6 est une vue en perspective d'un ballon dirigeable selon un deuxième mode de réalisation de l'invention,
- la figure 7 une vue de côté de la figure 6 présentant l'amarrage à la surface,
- la figure 8 est une vue en perspective d'un ballon dirigeable selon un troisième mode de réalisation de l'invention,
- la figure 9 une vue de face du ballon dirigeable de la figure 8.

Sur les différentes figures, les mêmes références désignent des éléments identiques ou similaires.

La direction avant mentionnée dans cette description doit s'entendre comme la direction allant dans la direction X désignée sur les figures. La direction arrière est alors dans la direction opposée. De manière similaire, le haut ou une partie supérieure mentionnée doit s'entendre comme la direction Z désignée sur les figures. Ces directions ne sont mentionnées que pour aider la lecture et la compréhension de l'invention.

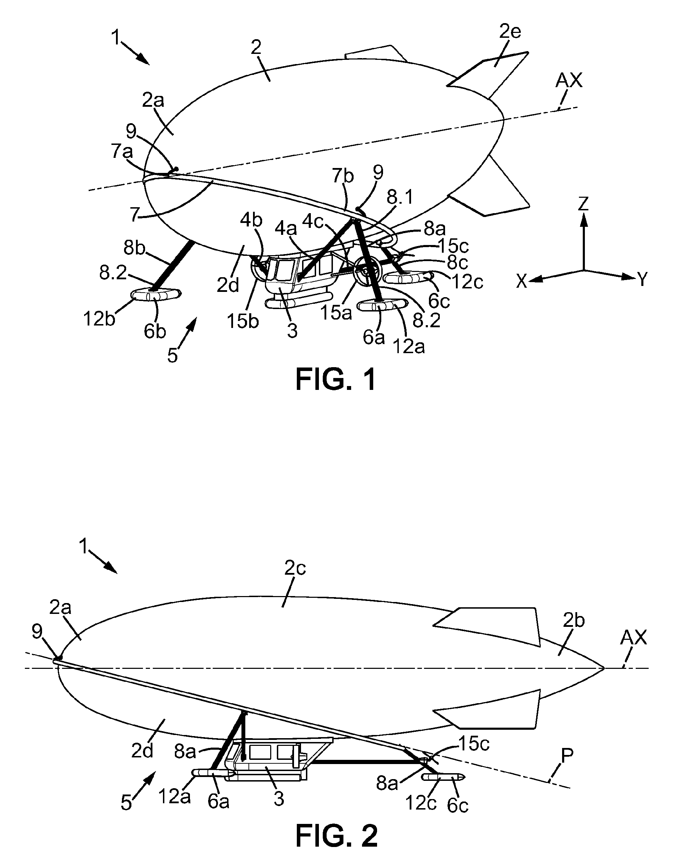

Comme cela est visible sur les figures 1 à 3, le ballon dirigeable 1 comporte :
- une enveloppe souple 2 sans structure interne rigide et enfermant un gaz plus léger que l'air,
- une nacelle 3 destinée à transporter par exemple un pilote.

L'enveloppe 2 est allongée sensiblement selon un axe longitudinal AX entre un nez 2a situé vers l'avant dudit ballon dirigeable et une queue 2b située vers l'arrière dudit ballon dirigeable. La queue 2b comporte des ailerons ou un empennage 2e adapté pour assurer la stabilité dans la direction d'avancement du vol du ballon dirigeable. L'enveloppe souple 2 comporte vers le haut (au dessus d'un plan sensiblement horizontal et passant par l'axe longitudinal AX) une partie supérieure 2c et vers le bas (au dessous du plan horizontal passant par l'axe AX) une partie inférieure 2d.

L'empennage 2e comprend des gouvernes de profondeur et de direction et l'enveloppe 2 comprend des ballonnets gonflables à l'air, pour manoeuvrer le ballon dirigeable.

La nacelle 3 est reliée à la partie inférieure 2d de l'enveloppe entre le nez 2a et la queue 2b.

Le ballon dirigeable 1 comprend en outre au moins trois pieds 6a, 6b, 6c éloignés horizontalement l'un de l'autre. Ces pieds 6a, 6b, 6c sont adaptés pour poser le ballon dirigeable 1 sur la surface de la zone d'atterrissage.

Le ballon dirigeable 1 comprend en outre une structure d'atterrissage 5 située à l'extérieur de l'enveloppe 2 et reliant entre eux les pieds (6a, 6b, 6c), la nacelle 3 et l'enveloppe 2, en entourant partiellement ladite enveloppe (2) selon une section coupant l'axe longitudinal AX.

Selon un premier mode de réalisation du ballon dirigeable 1 présenté sur les figures 1 à 5, la structure d'atterrissage 5 comprend :
- une structure de renfort 7 ayant une forme annulaire s'étendant depuis le nez 2a et entourant partiellement la partie inférieure 2d de l'enveloppe 2,
- une première traverse 4a s'étendant entre la nacelle 3 et la structure de renfort 7 sur un premier côté latéral du ballon dirigeable 1,
- une deuxième traverse 4b s'étendant entre la nacelle 3 et la structure de renfort 7 sur un deuxième côté latéral du ballon dirigeable 1, opposé au premier côté latéral,
- une troisième traverse 4c s'étendant vers l'arrière entre la nacelle 3 et un bras arrière 8c reliant la structure de renfort 7 au troisième pied 6c, et
- des bras 8a, 8b, 8c s'étendant chacun vers le bas depuis une première extrémité 8.1 fixée à la structure de renfort 7 jusqu'à une deuxième extrémité 8.2, chaque deuxième extrémité 8.2 comprenant un desdits pieds 6a, 6b, 6c adapté pour poser le ballon dirigeable sur la surface.

Plus précisément, la structure d'atterrissage 5 comprend sur les figures :
- un premier et deuxième bras avant 8a, 8b, situés sur un côté latéral de la structure de renfort 7 dans une portion avant, devant la nacelle 3, et
- un troisième bras 8c situé à l'arrière de la structure de renfort 7, derrière la nacelle 3.

La structure d'atterrissage 5 peut éventuellement comprendre d'autres traverses entre ces éléments afin de rigidifier ladite structure.

En variante, les bras avants 8a, 8b peuvent être articulés pour les replier depuis une position d'atterrissage représentée vers une position de vol dans laquelle ils s'étendent dans une direction sensiblement parallèle à l'axe longitudinal AX, les pieds 6a, 6b étant alors rapprochés de l'enveloppe 2 du ballon dirigeable.

Sur les figures 1 à 3, la structure de renfort 7 a une forme annulaire sensiblement elliptique, mais cette structure de renfort 7 externe à l'enveloppe 2 peut être une forme en boucle courbée et fermée sur elle-même, ou une forme circulaire, ou avoir une forme semi-annulaire, comme une poutre courbée de telle sorte qu'elle entoure partiellement l'enveloppe 2. Cette structure de renfort 7 est similaire à un « wishbone » de planche à voile, entourant la voile.

La structure de renfort 7 est par exemple comprise dans un plan incliné P (voir figure 2) vers le bas par rapport à l'axe longitudinal AX, et en direction de l'arrière du ballon dirigeable. De cette manière, la structure de renfort 7 enveloppe partiellement la partie inférieure 2d de l'enveloppe 2 et les bras 8a, 8b, 8c ont des longueurs réduites. La structure de renfort 7 peut être par exemple incurvée vers le haut vers l'avant du ballon dirigeable lorsque on le regarde de côté, comme sur la figure 2, pour réduire encore plus les longueurs des bras 8a, 8b, 8c, et améliore leur résistance mécanique.

La structure de renfort 7 peut être réalisée d'une poutre courbée réalisée d'une seule pièce.

La structure de renfort 7 et toutes les pièces de la structure d'atterrissage 5 doivent être légères et mécaniquement résistantes. Par exemple, ces éléments peuvent être réalisés en aluminium ou en carbone. Notamment, la structure de renfort 7 annulaire peut être réalisée de manière similaire à un mât de bateau. Alternativement, le magnésium, le bois, l'acier ou toute combinaison des matériaux précédents peut être utilisée.

Une section transversale de la structure de renfort 7 ou des bras 8a, 8b, 8c peut avantageusement être profilée dans la direction de l'axe longitudinal AX, pour réduire la trainée aérodynamique de ces pièces. Cette section transversale n'est pas obligatoirement constante le long de la structure.

La structure de renfort 7 est reliée à l'enveloppe 2 par des moyens d'accrochage 9 au moins en une portion de nez 7a de la structure de renfort à proximité du nez et en une autre portion 7b de la structure de renfort situé sur le côté du ballon dirigeable, par exemple située vers l'arrière à proximité de la nacelle 3, afin de supporter l'enveloppe 2 du ballon dirigeable 1.

Ces moyens d'accrochage 9 comprennent par exemple des câbles ou des cordes de tension exerçant des efforts de traction sur un élément d'accrochage fixé à l'enveloppe 2 pour contrôler le profil de l'enveloppe 2 au moins à proximité de la structure de renfort 7. L'élément d'accrochage comprend par exemple un support adapté à être fixé sur une portion de surface de l'enveloppe 2 afin de répartir les efforts, et un anneau solidarisé avec ledit support et adapté pour y passer au moins un desdits câbles de tension. Le support peut être un disque de toile s'étendant selon un rayon autour de l'anneau, ledit disque de toile pouvant lui-même comprendre des rayons raidisseurs.

Lorsqu'un ballon dirigeable avance en vol, son nez subit des efforts aérodynamiques important vers l'arrière selon l'axe longitudinal AX. Ces efforts aérodynamiques ont tendance non seulement à freiner le ballon dirigeable, mais aussi à déformer le nez 2a de son enveloppe. Au dessus d'une certaine vitesse le nez s'aplatit, ce qui a pour effet d'augmenter les efforts aérodynamiques et d'amplifier le phénomène. Ce problème est particulièrement gênant pour un ballon dirigeable à enveloppe souple. Ainsi, grâce à la structure de renfort 7 et aux moyens d'accrochage 9, l'enveloppe 2 est contrainte à conserver un profil à proximité de la structure de renfort 7, dans une direction sensiblement selon l'axe longitudinal AX. Ceci évite l'aplatissement du nez 2a de l'enveloppe 2 lorsque le ballon dirigeable 1 avance en vol. Ainsi, la pénétration de l'enveloppe souple 2 dans l'air est maintenue ou conservée.

En variante, il est également possible que ces moyens d'accrochage 9 soient commandés depuis la nacelle 3 du ballon. Par exemple, les efforts de tractions peuvent être modifiés, augmentés ou réduits en fonction de paramètres de vol : vitesse, altitude, montée, descente, virage. Ainsi, le profil et la tension de l'enveloppe peuvent être commandés pour faciliter le vol.

Un ballon dirigeable est habituellement très sensible à un vent latéral. L'enveloppe 2 a tendance à se déformer et le ballon dirigeable a tendance à basculer. La structure de renfort 7 permet de maintenir l'enveloppe 2, et les bras avant latéraux 8a, 8b donnent au ballon dirigeable 1 plus de stabilité sous vent latéral.

Un ballon dirigeable de l'art antérieur, amarré à la zone d'atterrissage par un mât tourne avec le vent autour du mât. Parfois celui-ci vient heurter le mât ou un objet se trouvant à proximité : De tels accidents ne sont pas rare et sont souvent fatals pour le ballon dirigeable, et notamment pour un ballon dirigeable du type à enveloppe souple. La structure de renfort 7 du ballon dirigeable 1 protège l'enveloppe souple 2 des contacts au moins dans les directions latérales et longitudinales vers l'avant.

L'enveloppe souple 2 du ballon dirigeable 1 permet de construire un ballon dirigeable peu couteux et léger, et la structure d'atterrissage 5 permet de stabiliser et de protéger un tel ballon dirigeable.

Le ballon dirigeable 1 comprend en outre un câble d'amarrage 10, adapté pour s'étendre vers l'avant entre ladite portion de nez 7a de la structure de renfort 7 et un point d'amarrage 11 sensiblement fixe de la surface adapté pour retenir le ballon dirigeable à proximité du point d'amarrage 11 lorsque ledit ballon dirigeable 1 est posé sur la surface.

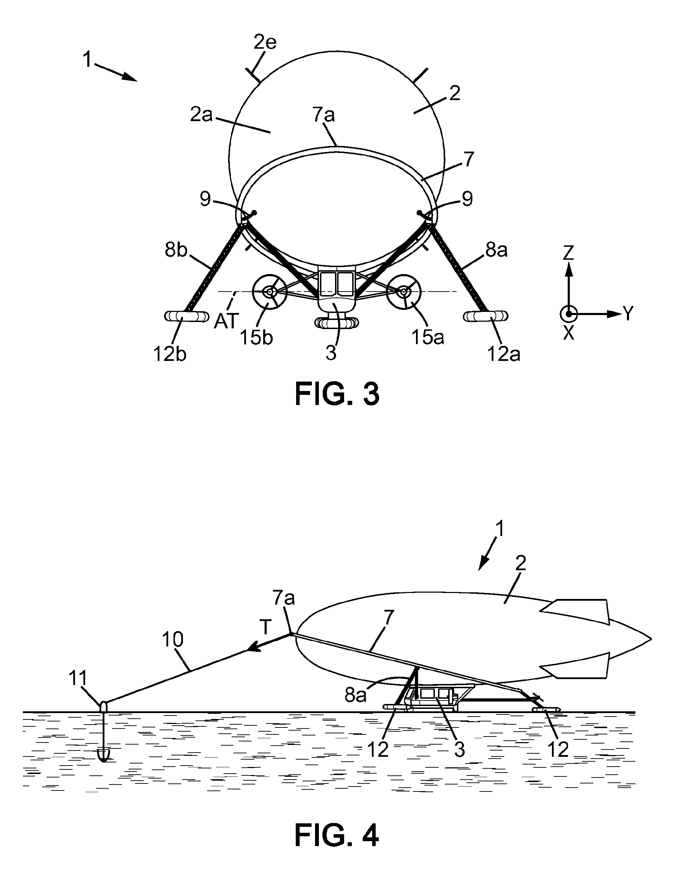

Le câble d'amarrage 10 exerce dans cette position un effort de traction T vers l'avant sur le nez du ballon dirigeable 1, comme représenté en figure 4.

Les bras avants 8a, 8b sont alors inclinés depuis la structure de renfort 7 vers l'avant pour mieux résister à cet effort de traction et conserver une bonne stabilité au ballon dirigeable 1.

Alternativement, le câble d'amarrage 10 peut s'étendre vers l'avant entre la nacelle 3 ou tout élément de la structure d'atterrissage 5 et le point d'amarrage 11, celui-ci exerçant toujours un effort de traction vers l'avant sur le ballon dirigeable, notamment lorsqu'il y a un vent de face.

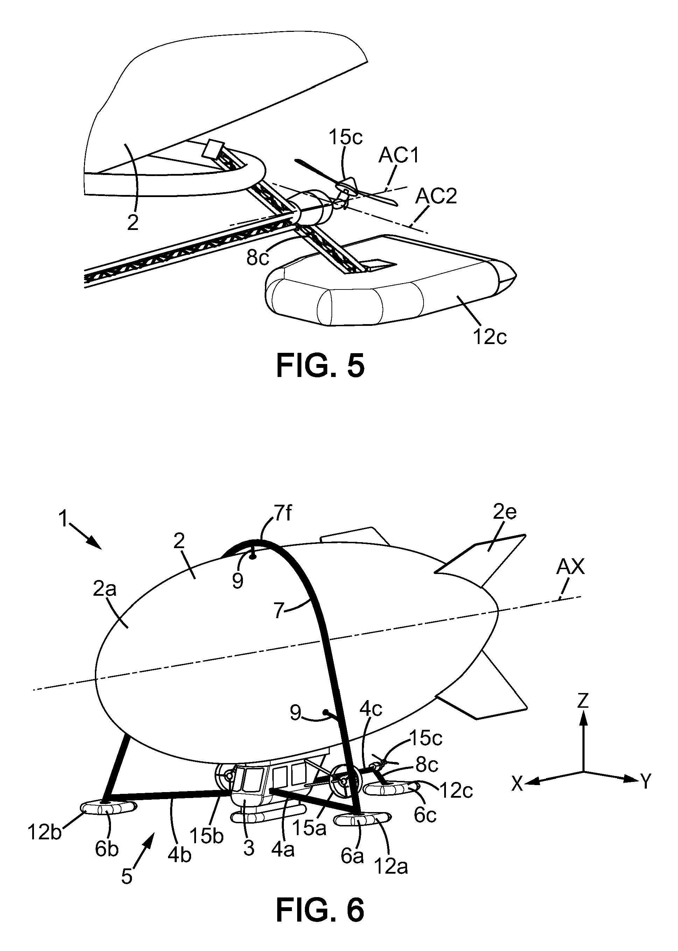

Le ballon dirigeable 1 comprend également :
- un premier et un deuxième propulseurs 15a, 15b latéralement de part et d'autre de la nacelle 3, ces propulseurs étant articulés en rotation autour d'un axe transversal AT sensiblement perpendiculaire à l'axe longitudinal AX, et
- un troisième propulseur 15c situé à l'arrière du ballon dirigeable, par exemple sur le bras arrière 8c, ledit troisième propulseur 15c étant lui articulé en rotation selon deux axes de contrôle AC1, AC2 en série, perpendiculaires entre eux, et décalés l'un par rapport à l'autre, de telle sorte que ce troisième propulseur peut générer une force de propulsion dans des directions sensiblement quelconque (figure 5). Le troisième propulseur 15c peut par exemple être articulé par un bras robotisé 16 ou tout autre dispositif équivalent.

Les propulseurs sont dotés d'hélices pivotantes mues par un ou plusieurs moteurs.

Les premier et deuxième propulseurs 15a, 15b sont adaptés pour générer la force de propulsion pour faire avancer le ballon dirigeable 1 en vol de croisière. Leur articulation selon l'axe transversal AT permet de les orienter soit pour aider le décollage, soit inversement pour aider l'atterrissage.

Le troisième propulseur 15c situé à proximité de la queue permet quant à lui, selon l'orientation donnée au couple d'axes, de faire tourner le ballon dirigeable 1 autour d'un axe sensiblement vertical comme un hélicoptère ou de compenser un couple de tangage longitudinal pour stabiliser le ballon dirigeable 1 en vol stationnaire.

Grâce à l'ensemble de ces propulseurs (15a, 15b, 15c) le ballon dirigeable 1 est particulièrement facilement manoeuvrable, notamment en vol stationnaire et en phases de vol d'atterrissage ou de décollage.

Le ballon dirigeable 1 de l'invention peut atterrir :
- soit sur des surfaces liquides, par exemple en mer ou sur un lac,
- soit sur des surfaces solides, sur terre, par exemple sur un aérodrome ou dans un champ.

Dans le premier cas d'un ballon dirigeable adapté à atterrir sur une surface liquide, chaque pied 6a, 6b, 6c du ballon dirigeable 1 est équipé d'un flotteur 12a, 12b, 12c. Le câble d'amarrage 10 est par exemple équipé à son extrémité d'une ancre et à une longueur prédéterminée d'une bouée.

Lorsque le ballon dirigeable 1 amerrit, le pilote fait dérouler le câble d'amarrage 10 de telle sorte que l'ancre s'enfonce en mer et que la bouée flotte sur la surface à un lieu appelé point d'amarrage 11, il amerri à proximité de la bouée sur ses flotteurs 12, et recule par rapport à cette bouée. L'action du vent sur l'enveloppe 2 du ballon dirigeable va alors naturellement éloigner le ballon dirigeable de cette bouée, mettre sous tension le câble d'amarrage 10 entre la portion de nez 7a et la bouée, et orienter l'axe longitudinal AX du ballon dirigeable 1 dans la direction du vent, face au vent. Lorsque le vent change de direction, le ballon dirigeable tourne alors à distance autour de la bouée.

Alternativement, le câble d'amarrage 10 est équipé à son extrémité d'un moyen d'ancrage adapté pour venir se solidariser avec une bouée déjà présente sur la surface liquide. Lorsque le ballon dirigeable 1 amerrit, le pilote approche le ballon de la bouée, fixe le moyen d'ancrage à la bouée, et amerri à proximité sur ses flotteurs. La suite de la manoeuvre est identique. Le moyen d'ancrage peut éventuellement être un anneau adapté pour entourer la bouée et se resserrer lorsque le ballon dirigeable 1 s'éloigne de la bouée et qu'un effort de traction dans le câble d'amarrage 10 augmente.

La nacelle 3 peut en outre comprendre un réservoir 3a et une pompe. Une fois amerri, le pilote du ballon dirigeable actionne une commande de la pompe pour remplir le réservoir de la nacelle 3. De cette manière, le ballon dirigeable 1 est lesté de manière autonome et la stabilité dudit ballon dirigeable est augmentée.

Dans le deuxième cas d'un ballon dirigeable adapté à atterrir sur une surface solide, chaque pied 6a, 6b, 6c du ballon dirigeable 1 est équipé d'une roue pour reposer au sol. Les roues sont éventuellement orientables autour d'un axe sensiblement vertical. La nacelle 3 est alors à une hauteur prédéterminée de la surface du sol. Le câble d'amarrage est par exemple équipé à son extrémité d'un crochet ou d'un grappin.

Lorsque le ballon dirigeable 1 atterri, le pilote fait dérouler le câble d'amarrage 10 de telle sorte que le grappin se fixe à un point d'amarrage 11 de la surface du sol, il atterrit à proximité dudit point d'amarrage 11 sur ses roues, et recule par rapport à ce point. L'action du vent sur l'enveloppe 2 du ballon dirigeable va alors naturellement éloigner le ballon dirigeable du point d'amarrage, mettre sous tension le câble d'amarrage 10 entre la portion de nez 7a et le point d'amarrage 11, et orienter l'axe longitudinal AX du ballon dirigeable 1 dans la direction du vent, face au vent. Lorsque le vent change de direction, le ballon dirigeable tourne alors à distance autour du point d'amarrage 11.

La nacelle 3 peut en outre comprendre un réservoir 3a ou bac et un moyen de préhension adapté pour prendre sur la surface du sol un matériau et l'amener dans le bac 3a. Une fois atterri, le pilote du ballon dirigeable actionne une commande de ce moyen de préhension pour remplir le bac 3a de la nacelle 3. De cette manière, le ballon dirigeable 1 est lesté de manière autonome et la stabilité dudit ballon dirigeable est augmentée.

Le moyen de préhension peut par exemple être une petite pelle mécanique disposant d'un godet ou d'une pince, une vis sans fin adaptée pour creuser un trou sous la nacelle 3 pour faire remonter un matériau extrait du sol.

Selon la nature du sol, le matériau peut être de la terre, du sable ou des graviers. Le moyen de préhension peut être adapté ou choisi en fonction de la nature du matériau de la surface du sol.

Les deux équipements cités des pieds peuvent être combinés. Chaque pied 6a, 6b, 6c du ballon dirigeable 1 peut être équipé d'un flotteur et d'une roue dépassant sous le flotteur. Les pieds peuvent également être équipés de tout autre moyen adapté pour se poser sur la surface.

La nacelle 3 du ballon dirigeable peut comprendre plusieurs moyens pour la lester, notamment une pompe pour remplir un réservoir et un moyen de préhension. Un tel ballon dirigeable 1 peut alors atterrir sur mer comme sur terre de manière autonome sans installation, telle qu'un mât d'amarrage, ni aucun personnel dans la zone d'atterrissage.

Les moyens de lestage peuvent être utilisés pas seulement lors d'un atterrissage. En effet, lors de long trajets, le poids de la nacelle diminue avec la consommation de carburant des propulseurs. Le ballon dirigeable 1 peut donc s'approcher périodiquement de la surface et se mettre en quasi-stationnaire sur une courte durée pour compenser cette perte de poids. Notamment, l'équipement d'un réservoir et d'une pompe permet de faire des traversées maritimes.

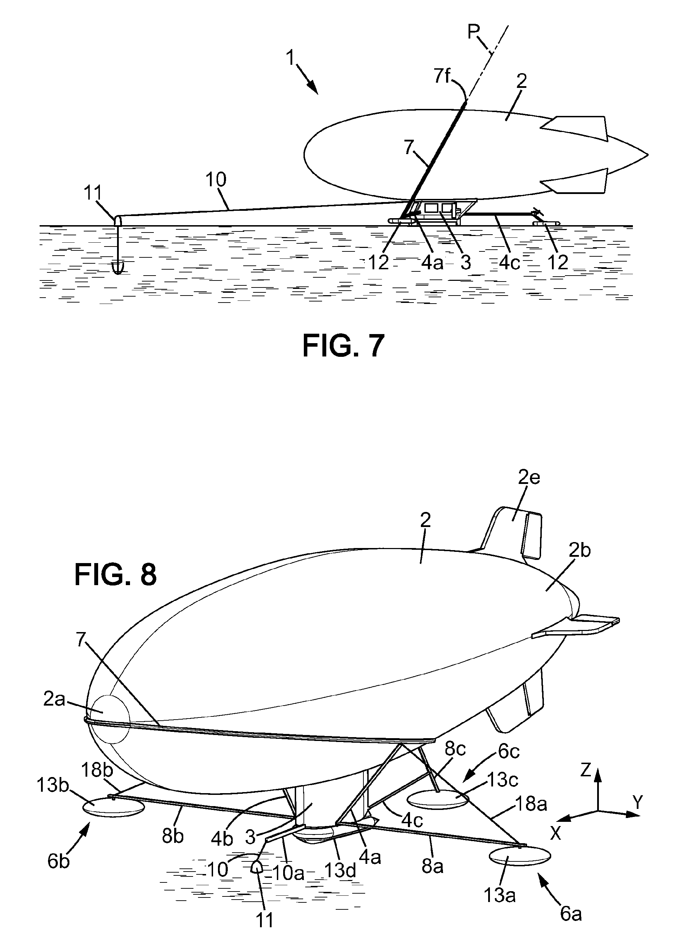

Selon un deuxième mode de réalisation de l'invention présenté sur les figures 6 et 7, la structure d'atterrissage 5 comprend :
- une structure de renfort 7 sous la forme d'une arche s'étendant vers le haut depuis un premier pied avant 6a jusqu'à une portion extrême supérieure 7f au dessus de l'enveloppe 2, puis s'étendant depuis cette portion extrême 7f vers le bas jusqu'au deuxième pied avant 6b, et
- une première traverse 4a s'étendant entre la nacelle 3 et le premier pied avant 6a,
- une deuxième traverse 4b s'étendant entre la nacelle 3 et le deuxième pied avant 6b, et
- une troisième traverse 4c s'étendant entre la nacelle 3 et le troisième pied 6c situé à l'arrière du ballon dirigeable.

La structure de renfort 7 est reliée à l'enveloppe 2 par au moins un moyen d'accrochage. Sur la figure 6, on remarque un tel moyen d'accrochage 9 entre la portion extrême supérieure 7f de la structure de renfort 7 et l'enveloppe 2, et un autre moyen d'accrochage 9 en une portion intermédiaire et reliée sur le côté de l'enveloppe 2.

Grâce à cette disposition l'enveloppe 2 est entourée par la structure d'atterrissage 5, et elle y est bien maintenue.

En outre, comme représenté en figure 7, le câble d'amarrage 10 de ce mode de réalisation s'étend vers l'avant depuis la nacelle 3 ou une des ou les traverses 4a, 4b et un point d'amarrage 11 lorsque le ballon dirigeable 1 est posé sur la surface. Le câble d'amarrage 10 exerce encore dans cette position un effort de traction T vers l'avant.

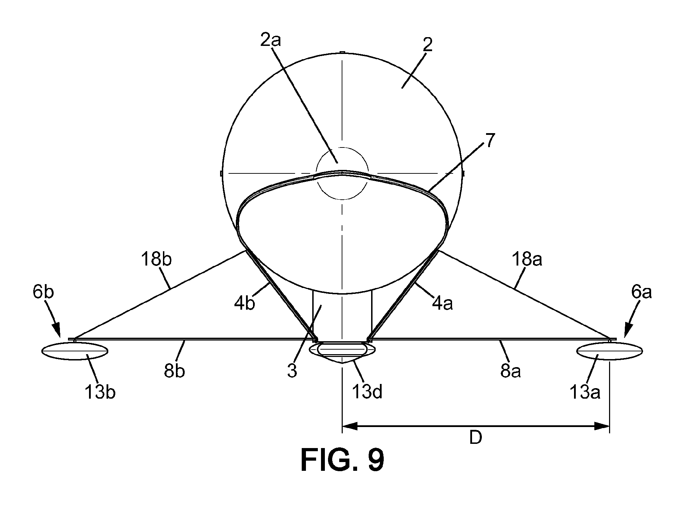

Selon un troisième mode de réalisation de l'invention, présenté sur les figures 8 et 9, la structure d'atterrissage 5 comprend :
- une structure de renfort 7 ayant une forme annulaire s'étendant depuis le nez 2a et entourant partiellement la partie inférieure 2d de l'enveloppe 2,
- une première traverse 4a s'étendant entre la nacelle 3 et la structure de renfort 7 sur un premier côté latéral du ballon dirigeable 1,
- une deuxième traverse 4b s'étendant entre la nacelle 3 et la structure de renfort 7 sur un deuxième côté latéral du ballon dirigeable 1, opposé au premier côté latéral,
- une troisième traverse 4c s'étendant vers l'arrière entre la nacelle 3 et un bras arrière 8c reliant la structure de renfort 7 au troisième pied 6c, et
- un bras arrière 8c s'étendant vers le bas depuis une première extrémité 8.1 fixée à la structure de renfort 7 jusqu'à une deuxième extrémité 8.2, la deuxième extrémité 8.2 comprenant un des pieds 6c adapté pour poser le ballon dirigeable sur la surface.

La structure d'atterrissage 5 comprend des bras avant 8a, 8b qui diffèrent du premier mode de réalisation de l'invention, par le fait qu'ils s'étendent sensiblement horizontalement entre une première extrémité fixée à la nacelle et une deuxième extrémité comprenant un pied avant 6a, 6b. Ces pieds avant 6a, 6b sont situés latéralement de chaque côté du ballon dirigeable 1 par rapport à l'axe longitudinal AX. Ils permettent avec le pied arrière 6c de poser le ballon dirigeable sur la surface.

Les pieds avant 6a, 6b sont écartés latéralement d'une distance D de la nacelle 3 par bras avant 8a, 8b.

Chaque pied avant 6a, 6b est équipé d'un réservoir 13a, 13b à la place des flotteurs 12a, 12b pour poser le ballon dirigeable sur une surface liquide. Ces réservoirs peuvent être remplis ou vidés de liquide par une pompe pour lester le ballon dirigeable.

Chaque réservoir 13a, 13b peut être immergé sous la surface et soulevé par un câble 18a, 18b le reliant à la structure de renfort 7, par exemple à proximité de la fixation d'une traverse 4a, 4b à la structure de renfort 7.

Ces câbles de réservoir 18a, 18b sont alors aptes à faire descendre les réservoirs en dessous de la surface liquide et à faire monter lesdits réservoirs au dessus de la surface liquide.

Le pied arrière 6c et la nacelle 3 sont également équipés de réservoirs 13c, 13d. Ils sont éventuellement équipés aussi de flotteurs 12c, 12d.

Le fonctionnement de ce mode de réalisation est donc inversé par rapport au fonctionnement des précédents modes de réalisation de l'invention.

Dans les précédents modes de réalisation, lorsque le ballon dirigeable amerrit, celui-ci a une portance (force ascensionnelle exercée par le gaz plus léger que l'air de l'enveloppe) inférieure à son poids (force d'attraction vers le bas). Les flotteurs 12a, 12b, 12c compensent la différence négative de la portance et du poids, pour que le ballon dirigeable 1 reste posé sur la surface de liquide.

Dans le troisième mode de réalisation, lorsque le ballon dirigeable 1 amerrit, le pilote conserve une portance supérieure au poids. Les réservoirs compensent la différence positive de la portance et du poids, pour que le ballon dirigeable reste posé sur la surface liquide.

Lorsque le ballon dirigeable 1 amerrit, les réservoirs avants 13a, 13b sont immergés sous la surface et remplis de liquide. Les câbles 18a, 18b sont alors actionnés pour monter ou soulever lesdits réservoirs 13a, 13b, au moins partiellement au dessus de la surface. Ceci génère une force additionnelle vers le bas, correspondant au poids du liquide déplacé au dessus de la surface, ladite force additionnelle étant égale à la valeur de la différence positive et ayant pour effet de « coller » le ballon dirigeable 1 sur la surface. Le ballon dirigeable est ainsi posé sur la surface de manière très stable.

Lorsque le ballon dirigeable 1 est sujet à un vent latéral, ce vent applique une force importante sur la surface de l'enveloppe 2 du côté d'où provient le vent, et tend à le faire basculer du côté opposé au vent. Dans ce cas, il est possible de soulever encore plus le réservoir du bras avant du côté du vent. De cette manière, les câbles 18a, 18b exercent des forces d'amplitudes différentes sur la structure de renfort 7 qui tend au contraire à faire basculer le ballon dirigeable 1 du côté où le réservoir est soulevé et à compenser ainsi l'effet du vent latéral.

Ce mode de réalisation présente de nombreux avantages.

Les câbles de réservoir 18a, 18b reprennent les efforts des pieds avants 6a, 6b, de sorte que les bras avant 8a, 8b sont plus résistants et plus légers.

Les bras avant 8a, 8b peuvent avoir une plus grande longueur, pour éloigner latéralement les pieds avant 6a, 6b d'une plus grande distance D. Le ballon dirigeable 1 résiste alors mieux à un vent latéral.

En outre, l'augmentation de la distance D et l'utilisation du liquide dans les réservoirs à la place de l'air dans les flotteurs permettent de réduire la taille de ces pieds. Ils offrent ainsi moins de résistance à l'avancement du ballon dirigeable 1.

Les réservoirs 13a, 13b, 13c, et 13d ont avantageusement une forme lenticulaire, comprenant :
- une section verticale elliptique allongée pour avoir un coefficient de trainée faible dans une direction parallèle à la surface, et provoquer peu de résistance à l'avancement du ballon dirigeable 1, et
- une section horizontale sensiblement circulaire pour avoir un coefficient de trainée important dans une direction perpendiculaire à la surface.

Grâce à ces caractéristiques des réservoirs, la résistance à l'avancement du ballon dirigeable est faible tout en résistant au basculement d'un vent latéral et en amortissant les mouvements de tangage et les chocs que peuvent provoquer des vagues.

Dans les divers modes de réalisation de l'invention, la structure de renfort 7 du ballon dirigeable laisse l'air s'écouler tout autour de l'enveloppe souple du ballon dirigeable 1. La structure de renfort 7 entoure partiellement l'enveloppe 2 en délimitant un premier et second côté. L'enveloppe 2 comprend une première surface du premier côté et une deuxième surface du deuxième côté. Les première et deuxième surfaces de l'enveloppe 2 sont souples et en contact avec l'écoulement de l'air dans lequel le ballon dirigeable 1 est destiné à voler.

L'enveloppe 2 n'a donc pas de structure interne rigide, et n'est pas recouverte par une structure externe rigide.

Cette structure de renfort 7 est une sorte de cadre ayant une ouverture traversée par l'enveloppe 2 et délimitant lesdits premier et deuxième côtés. Cette structure de renfort 7 est adaptée pour maintenir l'enveloppe 2 à l'intérieur de cette ouverture, par des moyens d'accrochage.

La structure de renfort 7 ne traverse pas l'enveloppe 2, et l'enveloppe 2 ne comprend pas de structure interne rigide.

La structure de renfort 7 ne recouvre pas l'enveloppe 2 : Elle ne la recouvre pas sur une surface étendue. La plus grande partie de la surface externe de l'enveloppe souple 2, par exemple 80 % de cette surface, est en contact avec l'écoulement de l'air. La structure de renfort 7 n'est donc pas une structure enveloppante. Elle a par exemple une forme annulaire autour de l'enveloppe 2.

La structure de renfort 7 est éventuellement à distance de l'enveloppe souple 2, sans contact avec celle-ci, les moyens d'accrochage 9 faisant le lien entre la structure de renfort 7 et l'enveloppe 2.

La structure de renfort 7 selon l'invention ne correspond pas à une structure d'un ballon dirigeable semi-rigide ou rigide.

Une pluralité de points d'accrochage répartis le long de la structure de renfort 7 sont par exemple reliés par des câbles aux moyens d'accrochage 9 répartis sur l'extérieur de l'enveloppe 2, selon une courbe correspondant sensiblement à la projection horizontale de la structure de renfort 7 sur l'enveloppe 2. La structure de renfort 7 entourant l'enveloppe 2, la courbe a une grande longueur curviligne et les efforts entre l'enveloppe 2 et la structure de renfort 7 sont mieux répartis sur la surface de l'enveloppe.

Ces moyens d'accrochage 9 peuvent être placés sur l'enveloppe 2 sensiblement en correspondance et/ou en alternance par rapport aux points d'accrochage de la structure de renfort 7. Ils peuvent également être placés sensiblement au dessus et/ou au dessous de la courbe projection de la structure de renfort 7. Ainsi, la structure de renfort 7 est reliée à une plus grande surface de l'enveloppe 2, et les efforts sont mieux répartis sur l'enveloppe.

La structure de renfort 7 permet de relier l'enveloppe souple 2 à la nacelle 3, de reprendre les efforts des pieds, de maintenir l'enveloppe et d'éviter les déformations de l'enveloppe. Elle est légère et peu couteuse.

En outre, le ballon dirigeable peut comprendre un bras longitudinal 10a (figure 8) sensiblement horizontal et s'étendant depuis la nacelle 3 vers le nez 2a du ballon dirigeable. Ce bras longitudinal 10a peut éventuellement être télescopique pour avoir une extrémité distale de la nacelle, dont la position est comprise entre la nacelle 3 et une position sensiblement à la verticale du nez 2a.

Ce bras longitudinal 10a est adapté pour déployer un câble d'amarrage 10 entre l'extrémité distale dudit bras et un point d'amarrage 11 sensiblement fixe de la surface. Le ballon dirigeable 1 est alors retenu à proximité du point d'amarrage 11 lorsqu'il est posé sur la surface.

Grâce à ce moyen d'amarrage, le ballon dirigeable 1 peut être posé fixement sur la surface. L'action du vent sur l'enveloppe 2 du ballon dirigeable met sous tension le câble d'amarrage 10, oriente l'axe longitudinal AX du ballon dirigeable 1 dans la direction du vent.

Un bras longitudinal 10a de faible longueur, inférieur à la distance entre la nacelle et la verticale du nez 2a est plus facile à réaliser, résiste mieux aux efforts, et permet d'obtenir un rayon de rotation du ballon dirigeable 1 faible. Mais l'action d'un vent latéral sur l'enveloppe est partiellement est réduite à cause de la portion de surface de l'enveloppe située en avant de l'extrémité distale dudit bras longitudinal 10a.

Un bras longitudinal 10a de longueur telle que l'extrémité distale du bras est sensiblement à la verticale du nez 2a permet d'utiliser toute l'action du vent pour orienter le ballon dirigeable 1, avec un rayon de rotation supérieur au cas précédent.

Dans les deux cas, le ballon dirigeable 1 se met rapidement dans la direction du vent, et subit l'action d'un vent latéral pendant une durée courte, qui évite le basculement.

## Revendications

1. Ballon dirigeable destiné à voler dans l'air et à se poser sur une surface solide ou liquide, comprenant :
- une enveloppe (2) souple sans structure interne rigide et enfermant un gaz plus léger que l'air, ladite enveloppe (2) étant allongé sensiblement selon un axe longitudinal (AX) entre un nez (2a) situé vers l'avant dudit ballon dirigeable et une queue (2b) située vers l'arrière dudit ballon dirigeable, et comportant une partie supérieure (2c) et une partie inférieure (2d), et
- une nacelle (3) située sous la partie inférieure (2d) de l'enveloppe entre le nez et la queue,
**caractérisé en ce que** le ballon dirigeable comprend en outre :
- au moins trois pieds (6a, 6b, 6c) éloignés horizontalement l'un de l'autre et adaptés pour poser le ballon dirigeable sur la surface, et
- une structure d'atterrissage (5) située à l'extérieur de l'enveloppe (2) reliant entre eux les pieds (6a, 6b, 6c), la nacelle (3) et l'enveloppe (2),
ladite structure d'atterrissage (5) comprenant une structure de renfort (7) pour supporter et maintenir l'enveloppe en entourant au moins partiellement ladite enveloppe (2) et en délimitant un premier et un second côté, l'enveloppe comprenant une première surface du premier côté et une seconde surface du second côté, les première et seconde surfaces de l'enveloppe étant souples et en contact avec un écoulement de l'air dans lequel le ballon dirigeable est destiné à voler.

2. Ballon dirigeable selon la revendication 1, dans lequel la structure d'atterrissage (5) comprend en outre :
- une structure de renfort (7) entourant partiellement l'enveloppe (2) et reliée par l'extérieur à l'enveloppe (2) par des moyens d'accrochage (9), afin de supporter et maintenir l'enveloppe du ballon dirigeable dans la structure d'atterrissage, et
- des traverses (4a, 4b) reliant la nacelle (3) à ladite structure de renfort (7).

3. Ballon dirigeable selon la revendication 2, dans lequel la structure de renfort (7) a une forme choisie parmi une forme annulaire, une forme semi-annulaire, et une forme courbée.

4. Ballon dirigeable selon la revendication 2, dans lequel la structure de renfort (7) comprend au moins une première portion au dessus d'un plan médian horizontal passant par l'axe longitudinal (AX) et une seconde portion au dessous dudit plan.

5. Ballon dirigeable selon la revendication 2, dans lequel la structure de renfort (7) est constituée d'une poutre courbée réalisée d'une seule pièce.

6. Ballon dirigeable selon la revendication 2, dans lequel les moyens d'accrochage (9) exercent des efforts sur l'enveloppe (2) pour contrôler un profil de l'enveloppe au moins à proximité de la structure de renfort (7), afin de conserver une bonne pénétration de l'enveloppe souple dans l'air lorsque le ballon dirigeable avance en vol.

7. Ballon dirigeable selon l'une des revendications 2 à 6, dans lequel la structure d'atterrissage (5) comprend en outre des bras (8a, 8b, 8c) s'étendant chacun vers le bas depuis une première extrémité (8.1) fixée à la structure de renfort (7) jusqu'à une deuxième extrémité (8.2), chaque deuxième extrémité (8.2) comprenant un desdits pieds (6a, 6b, 6c) adapté pour poser le ballon dirigeable sur la surface.

8. Ballon dirigeable selon l'une des revendications 1 à 7, dans lequel chaque pied (6a, 6b, 6c) est équipé d'au moins une roue adaptée pour que le ballon dirigeable puisse se poser et se déplacer sensiblement horizontalement sur une surface solide, et dans lequel les pieds (6a, 6b, 6c) sont situés verticalement vers le bas sous la nacelle (3), et dans lequel la nacelle (3) comprend un bac et un moyen de préhension adapté pour prendre sur la surface un matériau et l'amener dans le bac, afin de lester ledit ballon dirigeable.

9. Ballon dirigeable selon l'une des revendications 1 à 7, dans lequel chaque pied (6a, 6b, 6c) est équipé d'un flotteur adapté pour que le ballon dirigeable puisse se poser sur une surface liquide.

10. Ballon dirigeable selon l'une des revendications 1 à 7, dans lequel la nacelle (3) comprend un réservoir et une pompe adaptée pour remplir ledit réservoir lorsque le ballon dirigeable est posé sur ou en en vol quasi-stationnaire au dessus d'une surface liquide, afin de lester ledit ballon dirigeable.

11. Ballon dirigeable selon l'une des revendications 1 à 7, comprenant en outre une pluralité de propulseurs (15a, 15b, 15c) orientables, et dans lequel au moins un des propulseurs est orientable selon deux axes de contrôle (AC1, AC2) montés en série, l'un après l'autre, pour orienter selon une direction quelconque ledit propulseur.

12. Ballon dirigeable selon l'une des revendications 1 à 7, dans lequel chaque pied (6a, 6b, 6c) est équipé d'un réservoir (13a, 13b, 13c) adapté pour être au moins partiellement rempli lorsque le ballon dirigeable est posé sur ou en en vol quasi-stationnaire au dessus d'une surface, afin de lester ledit ballon dirigeable.

13. Ballon dirigeable selon la revendication 12, dans lequel le pied arrière (6c) et la nacelle (3) sont équipés de flotteurs.

14. Ballon dirigeable selon la revendication 12, dans lequel les pieds avant (6a, 6b) situés latéralement par rapport à un axe longitudinal (AX) de l'enveloppe (2) sont reliés à la structure d'atterrissage, chacun par un câble pour retenir dans une direction sensiblement verticale les réservoirs (13a, 13b) desdits pieds avant (6a, 6b).

15. Ballon dirigeable selon la revendication 14, dans lequel la structure d'atterrissage (5) comprend en outre des bras avant (8a, 8b) reliant chacun desdits pieds avant (6a, 6b) à la nacelle (3), et dans lequel les bras avant (8a, 8b) sont repliables dans une direction sensiblement parallèle à l'axe longitudinal (AX) lorsque le ballon dirigeable vole, et déployables latéralement lorsque le ballon dirigeable est soit prêt à être posé sur la surface, soit maintenu de manière quasi-stationnaire au dessus de la surface.

## Patentansprüche

1. Lenkbares Luftschiff, das dazu bestimmt ist, in der Luft zu fliegen und sich auf eine feste oder flüssige Oberfläche zu stellen, umfassend:
- eine biegsame Hülle (2) ohne starre innere Struktur, die ein Gas einschließt, das leichter als die Luft ist, wobei sich die Hülle (2) im Wesentlichen entlang einer Längsachse (AX) zwischen einer Nase (2a), die vorne am lenkbaren Luftschiff angeordnet ist, und einem Endstück (2b), das hinten am lenkbaren Luftschiff angeordnet ist, erstreckt, und umfassend einen oberen Teil (2c) und einen unteren Teil (2d), und
- eine Gondel (3), die sich unter dem Unterteil (2d) der Hülle zwischen der Nase und dem Endstück befindet,
**dadurch gekennzeichnet, dass** das lenkbare Luftschiff ferner umfasst:
- mindestens drei Füße (6a, 6b, 6c), die horizontal voneinander entfernt und dazu vorgesehen sind, das lenkbare Luftschiff auf die Oberfläche zu stellen, und
- eine Landestruktur (5), die sich außerhalb der Hülle (2) befindet und die Füße (6a, 6b, 6c), die Gondel (3) und die Hülle (2) miteinander verbindet,
wobei die Landestruktur (5) eine Verstärkungsstruktur (7) umfasst, um die Hülle zu tragen und zu halten, wobei sie die Hülle (2) zumindest teilweise umgibt und eine erste und eine zweite Seite begrenzt, wobei die Hülle eine erste Fläche auf der ersten Seite und eine zweite Fläche auf der zweiten Seite umfasst, wobei die erste und die zweite Fläche der Hülle biegsam sind und mit einer Strömung der Luft in Kontakt stehen, in der das lenkbare Luftschiff fliegen soll.

2. Lenkbares Luftschiff nach Anspruch 1, bei dem die Landestruktur (5) ferner umfasst:
- eine Verstärkungsstruktur (7), die teilweise die Hülle (2) umgibt und von außen mit der Hülle (2) durch Befestigungsmittel (9) verbunden ist, um die Hülle des lenkbaren Luftschiffes in der Landestruktur zu tragen und zu halten, und
- Querstreben (4a, 4b), die die Gondel (3) mit der Verstärkungsstruktur (7) verbinden.

3. Lenkbares Luftschiff nach Anspruch 2, bei dem die Verstärkungsstruktur (7) eine Form hat, die unter einer ringförmigen, halb-ringförmigen und einer gekrümmten Form ausgewählt ist.

4. Lenkbares Luftschiff nach Anspruch 2, bei dem die Verstärkungsstruktur (7) mindestens einen ersten Abschnitt über einer horizontalen Mittelebene, die durch die Längsachse (AX) verläuft, und einen zweiten Abschnitt unter der Ebene umfasst.

5. Lenkbares Luftschiff nach Anspruch 2, bei dem die Verstärkungsstruktur (7) von einem aus einem Stück hergestellten gekrümmten Träger gebildet ist.

6. Lenkbares Luftschiff nach Anspruch 2, bei dem die Befestigungsmittel (9) Kräfte auf die Hülle (2) ausüben, um ein Profil der Hülle zumindest in der Nähe der Verstärkungsstruktur (7) zu kontrollieren, um eine gute Eindringung der biegsamen Hülle in die Luft zu bewahren, wenn sich das lenkbare Luftschiff im Fliegen vorwärtsbewegt.

7. Lenkbares Luftschiff nach einem der Ansprüche 2 bis 6, bei dem die Landestruktur (5) ferner Arme (8a, 8b, 8c) umfasst, die sich jeweils nach unten von einem ersten Ende (8.1), das an der Verstärkungsstruktur (7) befestigt ist, zu einem zweiten Ende (8.2) erstrecken, wobei jedes zweite Ende (8.2) einen der Füße (6a, 6b, 6c), der dazu vorgesehen ist, das lenkbare Luftschiff auf die Oberfläche zu stellen, umfasst.

8. Lenkbares Luftschiff nach einem der Ansprüche 1 bis 7, bei dem jeder Fuß (6a, 6b, 6c) mit mindestens einen Rad ausgestattet ist, das vorgesehen ist, damit sich das lenkbare Luftschiff auf eine feste Oberfläche stellen und im Wesentlichen horizontal auf dieser bewegen kann, und bei dem die Füße (6a, 6b, 6c) vertikal nach unten unter der Gondel (3) angeordnet sind, und bei dem die Gondel (3) einen Behälter und ein Greifmittel umfasst, das dazu vorgesehen ist, auf der Oberfläche ein Material zu ergreifen und es in den Behälter einzubringen, um das lenkbare Luftschiff mit Ballast zu versehen.

9. Lenkbares Luftschiff nach einem der Ansprüche 1 bis 7, bei dem jeder Fuß (6a, 6b, 6c) mit einem Schwimmer ausgestattet ist, der vorgesehen ist, damit sich das lenkbare Luftschiff auf eine flüssige Oberfläche stellen kann.

10. Lenkbares Luftschiff nach einem der Ansprüche 1 bis 7, bei dem die Gondel (3) einen Behälter und eine Pumpe umfasst, die dazu vorgesehen ist, den Behälter zu füllen, wenn das lenkbare Luftschiff auf eine flüssige Oberfläche gestellt wird oder sich in einem gleichsam stationären Flug über dieser befindet, um das lenkbare Luftschiff mit Ballast zu versehen.

11. Lenkbares Luftschiff nach einem der Ansprüche 1 bis 7, ferner umfassend eine Vielzahl von ausrichtbaren Antrieben (15a, 15b, 15c), und bei dem mindestens einer der Antriebe entlang zweier in Serie nacheinander montierter Kontrollachsen (AC1, AC2) ausrichtbar ist, um den Antrieb in eine beliebige Richtung auszurichten.

12. Lenkbares Luftschiff nach einem der Ansprüche 1 bis 7, bei dem jeder Fuß (6a, 6b, 6c) mit einem Behälter (13a, 13b, 13c) ausgestattet ist, der dazu vorgesehen ist, zumindest teilweise gefüllt zu werden, wenn das lenkbare Luftschiff auf eine Oberfläche gestellt oder sich in einem gleichsam stationären Flug über dieser befindet, um das lenkbare Luftschiff mit Ballast zu versehen.

13. Lenkbares Luftschiff nach Anspruch 12, bei dem der hintere Fuß (6c) und die Gondel (3) mit Schwimmern ausgestattet sind.

14. Lenkbares Luftschiff nach Anspruch 12, bei dem die vorderen Füße (6a, 6b), die sich seitlich zu einer Längsachse (AX) der Hülle (2) befinden, mit der Landestruktur jeweils durch ein Seil verbunden sind, um die Behälter (13a, 13b) der vorderen Füße (6a, 6b) in einer im Wesentlichen vertikalen Richtung zu halten.

15. Lenkbares Luftschiff nach Anspruch 14, bei dem die Landestruktur (5) ferner vordere Arme (8a, 8b) umfasst, die jeden der vorderen Füße (6a, 6b) mit der Gondel (3) verbinden, und bei dem die vorderen Arme (8a, 8b) in eine Richtung im Wesentlichen parallel zur Längsachse (AX) umgelegt werden können, wenn das lenkbare Luftschiff fliegt, und seitlich ausgeklappt werden können, wenn das lenkbare Luftschiff entweder bereit ist, auf die Oberfläche gestellt zu werden, oder gleichsam stationär über der Oberfläche gehalten wird.

## Claims

1. An airship intended to fly through the air and to be set down on a solid or liquid surface, comprising:
- a flexible envelope (2) with no rigid internal structure and containing a gas lighter than air, said envelope (2) being elongated substantially along a longitudinal axis (AX) between a nose (2a) situated toward the front of said airship and a tail (2b) situated toward the rear of said airship, and comprising an upper part (2c) and a lower part (2d), and
- a gondola (3) situated under the lower part (2d) of the envelope between the nose and the tail, **characterized in that** the airship further comprises:
- at least three feet (6a, 6b, 6c) spaced horizontally apart and designed for setting the airship down on the surface, and
- a landing structure (5) situated on the outside of the envelope (2) connecting together the feet (6a, 6b, 6c), the gondola (3) and the envelope (2),
said landing structure (5) comprising a reinforcing structure (7) in order to support and maintain the envelope by surrounding at least partially said envelope (2) and thereby delimiting a first and a second side, the envelope comprising a first surface on the first side and a second surface on the second side, the first and second surfaces of the envelope being flexible and in contact with a flow of the air through which the airship is intended to fly.

2. The airship as claimed in claim 1, in which the landing structure (5) further comprises:
- a reinforcing structure (7) partially surrounding the envelope (2) and connected on the outside to the envelope (2) by means of attachment (9), so as to support and hold the envelope of the airship in the landing structure, and
- crossmembers (4a, 4b) connecting the gondola (3) to said reinforcing structure (7).

3. The airship as claimed in claim 2, in which the reinforcing structure (7) has a shape chosen from an annular shape, a semi-annular shape and a curved shape.

4. The airship as claimed in claim 2, in which the reinforcing structure (7) comprises at least one first portion above a horizontal median plane passing through the longitudinal axis (AX) and a second portion below said plane.

5. The airship as claimed in claim 2, in which the reinforcing structure (7) is made up of a curved beam produced as a single piece.

6. The airship as claimed in claim 2, in which the means of attachment (9) apply force to the envelope (2) in order to control a profile of the envelope at least near the reinforcing structure (7) in order to maintain good penetration of the flexible envelope through the air when the airship is moving forward in flight.

7. The airship as claimed in one of claims 2 to 6, in which the landing structure (5) further comprises arms (8a, 8b, 8c) each extending downward from a first end (8.1) fixed to the reinforcing structure (7) as far as a second end (8.2), each second end (8.2) comprising one of said feet (6a, 6b, 6c) designed for setting the airship down on the surface.

8. The airship as claimed in one of claims 1 to 7, in which each foot (6a, 6b, 6c) is equipped with at least one wheel designed so that the airship can be set down and moved substantially horizontally on a solid surface, and in which the feet (6a, 6b, 6c) are situated vertically downward under the gondola (3), and in which the gondola (3) comprises a pan and a pickup means designed to pick up material from the surface and convey it into the pan, in order to ballast said airship.

9. The airship as claimed in one of claims 1 to 12, in which each foot (6a, 6b, 6c) is equipped with a float designed so that the airship can be set down on a liquid surface.

10. The airship as claimed in one of claims 1 to 7, in which the gondola (3) comprises a reservoir and a pump designed to fill said reservoir when the airship is set down on or in near-hovering flight over a liquid surface, in order to ballast said airship.

11. The airship as claimed in one of claims 1 to 7, further comprising a plurality of orientable propulsion units (15a, 15b, 15c), and in which at least one of the propulsion units is orientable about two control axes (AC1, AC2) mounted in series, one after the other, so that said propulsion unit can be oriented in any direction.

12. The airship as claimed in one of claims 1 to 7, in which each foot (6a, 6b, 6c) is equipped with a reservoir (13a, 13b, 13c) designed to be at least partially filled when the airship is set down on or in near-hovering flight over a surface, in order to ballast said airship.

13. The airship as claimed in claim 12, in which the rear foot (6c) and the gondola (3) are fitted with floats.

14. The airship as claimed in claim 12, in which the front feet (6a, 6b) situated laterally with respect to a longitudinal axis (AX) of the envelope (2) are each connected to the landing structure by a cable in order to hold the reservoirs (13a, 13b) of said front feet (6a, 6b) in a substantially vertical direction.

15. The airship as claimed in claim 14, in which the landing structure (5) further comprises front arms (8a, 8b) connecting each of said front feet (6a, 6b) to the gondola (3), and in which the front arms (8a, 8b) can be folded in a direction substantially parallel to the longitudinal axis (AX) when the airship is in flight, and can be deployed laterally when the airship is either ready to be set down on the surface or held in near-hovering flight over the surface.
